# EUROPÄISCHE PATENTSCHRIFT

(11) **EP 1 393 979 B1**
(45) Veröffentlichungstag und Bekanntmachung des Hinweises auf die Patenterteilung: **01.02.2006**
(21) Anmeldenummer: 03017833.9
(22) Anmeldetag: 05.08.2003
(51) Int. Cl.: B60R 9/06

(54) **Lastenträger für ein Kraftfahrzeug**
Load carrier for a motor vehicle
Porte-charge pour un vèhicule automobile

(30) Priorität: 30.08.2002 DE 10240463
(43) Veröffentlichungstag der Anmeldung: 03.03.2004
(73) Patentinhaber: AL-KO KOBER AG, 89359 Kötz (DE)
(72) Erfinder: Müller, Andreas, 89312 Günzburg (DE)
(74) Vertreter: Binder, Armin

(56) Entgegenhaltungen:
- EP-A- 0 710 588
- DE-U- 9 404 236
- DE-U- 9 415 050

## Beschreibung

Die Erfindung betrifft einen Lastenträger zur Befestigung an einer Anhängerkupplung eines Kraftfahrzeuges, mindestens bestehend aus einem Kugelgehäuse, das einen Kugelkopf der Anhängerkupplung zumindest teilweise umschließt, einem Klemmmechanismus, der den Kugelkopf fest mit dem Kugelgehäuse verbinden kann, einer Trägervorrichtung zur Aufnahme der Lasten, vorzugsweise zur Aufnahme von Zweirädern, vorzugsweise Fahrrädern, und einem Kippmechanismus zwischen Kugelgehäuse und der Trägervorrichtung, der eine relative Verkippung von Kugelgehäuse und Trägervorrichtung ermöglicht, wobei der Kippmechanismus einen federbelasteten Ver-/Entriegelungsmechanismus aufweist.

Größere sperrige Lasten, wie zum Beispiel Fahrräder oder Skier, können zum Teil nicht mehr im Kofferraum eines Kraftwagens verstaut werden. Eine Lastanbringung auf dem Fahrzeugdach beeinflusst die Fahrzeugaerodynamik und somit den Spritverbrauch negativ. Deshalb werden solche Lasten in heutiger Zeit vermehrt auf Lastenträgern, die am Fahrzeugheckbereich an eine vorhandene Anhängerkupplung adaptiert werden, transportiert.

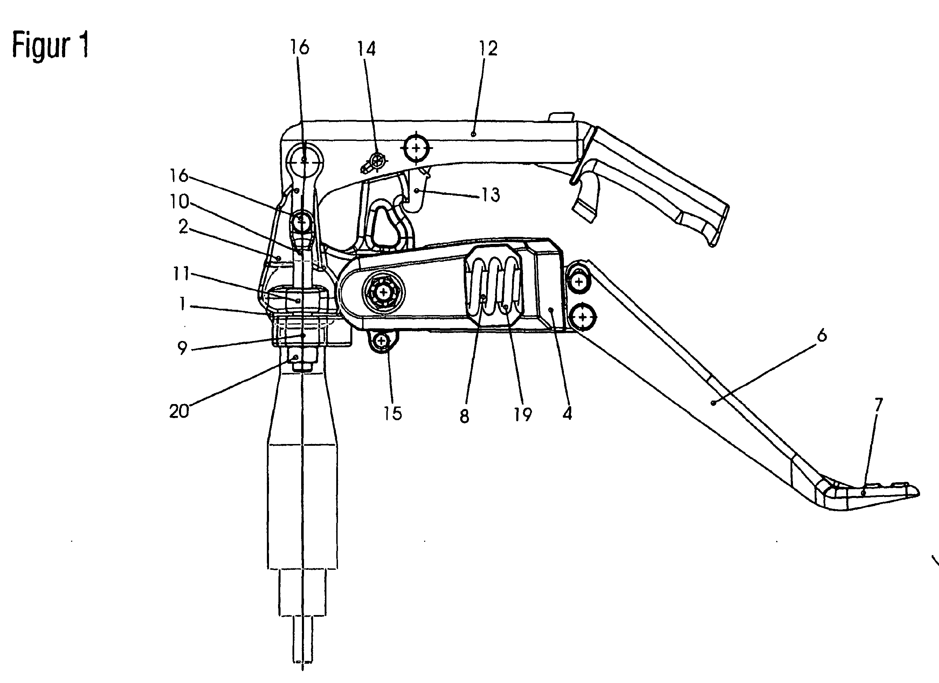

Aus dem Stand der Technik sind solche Lastenträger in verschiedenen Ausführungen schon bekannt. So wird im Gebrauchsmuster G 94 15 050.8 speziell der Befestigungsmechanismus eines solchen Lastenträgers beschrieben. In Figur 1 des oben genannten Gebrauchsmusters wird gezeigt, wie der Anhängerkugelkopf 12, der von einem Gehäuse 20 teilweise umschlossen wird, mittels einer Platte 24 über Verschraubungen 25 verklemmt wird. Diese schraubbare Befestigungsart ist sehr umständlich und nur mit zusätzlichem Werkzeug möglich. Aus der Praxis ist außerdem bekannt, daß im Fahrbetrieb bei dieser Methode der Befestigung in gewissen Zeitabstände ein Nachziehen der Verschraubung notwendig ist.

Um die umständliche schraubbare Befestigung zu umgehen, wurden bereits Klemmvorrichtungen für den Kugelkopf vorgeschlagen, die ohne Werkzeug nur von Hand betätigbar sind. Die Schrift EP 0 710 588 B1 beschreibt eine solche Klemmvorrichtung. In Figur 3 dieser Schrift wird der Kugelkopf 17 einer Anhängerkupplung über einen Hebel 9, der ein Klemmelement 24 an den unteren Rand des Kugelkopfes 17 drücken kann, in einem Gehäuse verklemmt. Das "Einklemmen" des Kugelkopfes ist zwar schnell zu bewerkstelligen, aber die Klemmwirkung dieses Mechanismus ist unzureichend. So ist bei dieser Art der Klemmung ein Abkippen des Lastenträgers möglich. Um das Abkippen dennoch zu verhindern, wird am Gehäuse eine Stützplatte 20 notwendig. Diese Stützplatte 20 greift am Hals weit unterhalb des Kugelkopfes an der Anhängerkupplung ein. Durch die Position der Stützplatte 20 ist der Aufbau dieser Klemmvorrichtung sehr voluminös. Da neuere Kugelstangen von Anhängerkupplungen sehr oft aus Leichtmetall gefertigt sind, kann es durch die eben beschriebene Stützplatte 20 auch zu unerwünschten Beschädigungen und Abnutzungserscheinungen an der Kugelstange kommen.

Weiterhin wird auf die DE 94 04 236.5 U1 verwiesen, die einen Lastenträger zur Befestigung an einer Anhängerkupplung eines Kraftfahrzeuges nach dem Oberbegriff des Patenanspruches 1 offenbart, bei dem eine feststehende Spannbacke 16 angeordnet ist, auf die eine spiegelsymmetrisch angeordnete, spiegelsymmetrisch aufgebaute und axial bewegliche Spannbacke 17 zu bewegt wird.

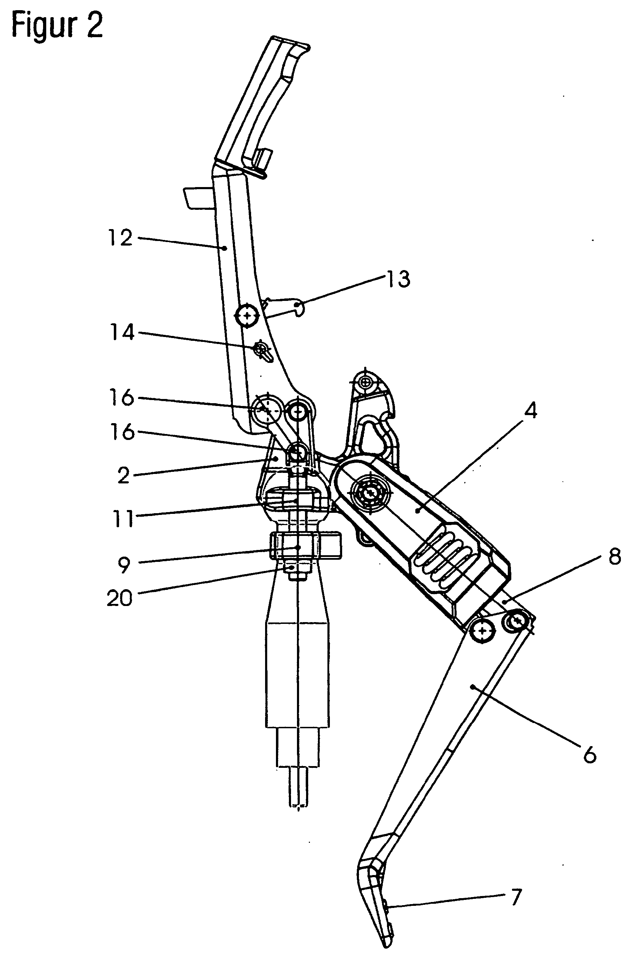

Der Lastenträger 1 wird mit Hilfe der beiden verklemmten Spannbacken 16 und 17 (siehe Figur 2) durch eine kraftschlüssige beziehungsweise reibschlüssige Verbindung an der Anhängerkupplung befestigt. Die Klemmkräfte der Spannbacken 16 und 17 wirken senkrecht auf eine Fläche, die senkrecht zur Kraftfahrzeugfahrtrichtung ist und durch den Hacken der Anhängerkupplung verläuft. Abhängig vom Beladungszustand des Lastenträgers und einer möglichen Lockerung der kraftschlüssigen beziehungsweise reibschlüssigen Verbindung, kann es zu einem ungewollten Abkippen des Lastenträgers kommen.

Die Aufgabe der Erfindung besteht darin, einen Lastenträger, vorzugsweise Fahrradlastenträger, zur Befestigung an einer Anhängerkupplung eines Kraftfahrzeuges zur Verfügung zu stellen, der ohne Zusatzwerkzeug schnell von Hand zu montieren ist. Außerdem sollte die Klemmung des Kugelkopfes derart zuverlässig ausgeführt sein, dass ein Abkippen des Lastenträgers an der Anhängerkupplung nicht mehr auftritt. Eine weitere Aufgabe ist es, den Aufbau dieser Klemmvorrichtung sehr kompakt zu gestalten.

Um die Montage bzw. Demontage des Lastenträgers am Kraftfahrzeug bedienerfreundlicher zu gestalten, schlägt der Erfinder vor, einen Lastenträger zur Befestigung an einer Anhängerkupplung eines Kraftfahrzeuges, mindestens bestehend aus einem Kugelgehäuse, das einen Kugelkopf der Anhängerkupplung zumindest teilweise umschließt, einem Klemmmechanismus, der den Kugelkopf fest mit dem Kugelgehäuse verbinden kann, einer Trägervorrichtung zur Aufnahme der Lasten, vorzugsweise zur Aufnahme von Zweirädern, vorzugsweise Fahrrädern, dahingehend zu verbessern; dass der Klemmmechanismus ein Hebelwerk aufweist, welches den Kugelkopf zwischen dem Kugelgehäuse und einer gabelförmige Konterplatte verklemmt, wobei die gabelförmige Konterplatte einen zum Kugelkopf hin zumindest teilweise konischen Rand und eine Rand-/Konterfläche besitzt, die an der unteren Randfläche des Kugelkopfes angreift und die Konterplatte den Hals der Anhängerkupplung unterhalb des Kugelkopfes umgreift.

Durch diese Ausführung der Konterplatte wird das "Einfädeln" des Kugelkopfes zwischen Konterplatte und Kugelgehäuse durch die zwei Gabelzinken der Konterplatte geführt und erleichtert. Der zum Teil konisch verlaufende Rand der Konterplatte ermöglicht beim Zusammendrücken des Kugelkopfes zwischen Konterplatte und Kugelgehäuse zum einen eine optimale Zentrierung des Kugelkopfes im Klemmmechanismus und zum anderen, durch die Rand-/Konterfläche unterstützt, eine sehr gute Verklemmung durch die bessere flächige Kontaktierung .

Weiterhin sollte die Konterplatte mit zumindest einem Zugelement, vorzugsweise mit einer oder zwei Zugstangen verbunden sein, wobei die zumindest eine Zugstange in zumindest einer Führung im Kugelgehäuse geführt wird und an einem handbetätigten Hebelmechanismus angreift. Der Erfinder weist darauf hin, dass als Zugelement auch flexible Elemente wie, Ketten oder Drähte, geeignet sind, die in einer Hebelendstellung die Konterplatte mit dem Kugelkopf und dem Kugelgehäuse verklemmen können. In der Ausführung des Zugelementes als Zugstange, kann durch die Zugstangenlänge und die Führung der Zugstange für den Bediener eine homogene, ruckelfreie Betätigung des Klemmmechanismus unter maximaler Klemmkraft erreicht werden. Wird die Zugstange in einer Achse geführt und über zusätzlich zwei senkrecht zu dieser Achse angeordnete Schwenkachsen mit einem Handhebel verbunden, so wird der Bedienungskomfort weiter verbessert.

Der Erfinder hat außerdem erkannt, dass die Kugelköpfe von Anhängerkupplungen in ihren Größenabmessungen gewisse Toleranzen aufweisen. Außerdem kann der Kugelkopf einer Anhängerkupplung im Laufe der Zeit durch Verschleiß oder durch Auffahrunfälle/Einparkunfälle abgenutzt werden. Um trotz dieser Einflüsse immer eine besonders feste Klemmung des Lastenträgers auf der Anhängerkupplung des Kraftfahrzeuges gewährleisten zu können, schlägt der Erfinder vor, das Zugelement in seiner Länge einstellbar auszuführen. Da das Zugelement an der Konterplatte befestigt ist, kann durch variable Längeneinstellung des Zugelementes der Abstand der Konterplatte zum unteren Rand des Kugelkopfes, zum Beispiel mit einem an dem Zugelement befindlichem Schraubenelement, eingestellt und bei Bedarf auch nachjustiert werden. Diese variable Einstellmöglichkeit ermöglicht es dem Besitzer des Lastenträgers diesen an mehreren Fahrzeugen mit Anhängerkugelköpfen, die größere Toleranzen aufweisen, einzusetzen.

Eine weitere Verbesserung sieht vor, dass der Handhebel als Totpunkthebel ausgeführt ist. Idealerweise sollte dieser Totpunkt, an dem das Maximum der Klemmkraft erreicht wird, mit einer Hebelendposition übereinstimmen. Da der Bediener nicht, wie bei einem Handbremshebel die Hebelposition frei wählen kann, wird durch diese Ausführung eine Fehlbedienung, zum Beispiel durch eine falsche Hebelposition, vermieden.

Bei vielen Kraftfahrzeugen ist der Abstand des Kugelkopfes von der Fahrzeugheckpartie unterschiedlich. Eine Befestigung des Lastenträgers mittels des Handhebels ist also aus Platzgründen nicht in jeder Hebelposition möglich. So ist bei größerem Platzangebot zwischen Kraftfahrzeugheckbereich und zu montierenden Lastenträger eine seitliche Hebelanbringung günstiger, während bei extrem kleinen Platzangebot zwischen Kraftfahrzeugheckbereich und zu montierenden Lastenträger die seitlich Montage fast unmöglich ist. Um diesem Umstand Rechnung zu tragen, schlägt der Erfinder vor, den Handhebel entweder parallel zur Fahrtrichtung oder senkrecht zur Fahrtrichtung des Kraftfahrzeuges auszurichten.

Besonders günstig ist es, wenn der Handhebel in der geschlossenen Klemmstellung mittels eines Hakens oder einer Klinke, die unter Federlast stehen kann, am Kugelgehäuse wieder lösbar befestigt ist. Hierdurch wird effektiv vermieden, dass der Lastenträger sich während der Fahrt, durch Lösen des Handhebels und durch Öffnen des Klemmmechanismus, von der Anhängerkupplung lockert beziehungsweise löst.

Der an die Anhängerkupplung eines Fahrzeuges montierte Lastenträger kann durch ein Schloss, welches den Handhebel zum Beispiel am Kugelgehäuse befestigt, zusätzlich gesichert werden. Hierdurch wird sichergestellt das der Lastenträger nicht gestohlen werden kann.

Der Erfinder hat ein weiteres Problem erkannt, welches bei bisher bekannten Lastenträger auftritt. Durch die Montage des Lastenträgers am Fahrzeugheckbereich wird der Zugang zur Heckklappe/Kofferraumdeckel des Fahrzeuges behindert beziehungsweise das Öffnen der Heckklappe/Kofferraumdeckel verhindert. Um dieses Problem zu entschärfen, wurden neuere Lastenträger horizontal abklappbar ausgeführt. Im Gebrauchsmuster G 93 14 205.6 wird ein solcher abklappbarer Lastenträger beschrieben. Dieser Lastenträger wird nach Betätigung eines Handhebels, der einen Verriegelungsmechanismus löst, schwenkbar. Solche abklappbaren Lastenträger sind jedoch hinsichtlich der Bedienung sehr unkomfortabel. Ein gravierender Nachteil dieser abklappbaren Ausführung ist, dass der Handhebel ungünstig in der Nähe der Anhängerkupplung angebracht ist und somit der Abklappmechanismus im beladenen Zustand des Lastenträgers nur schwer zugänglich ist. Um Zugang zur Fahrzeugheckklappe beziehungsweise zum Kofferraumdeckel zu bekommen, muss der Bediener seitlich neben dem Lastenträger stehen und mit einer Hand den Handhebel betätigen und gleichzeitig mit der anderen Hand den herabklappenden Träger mit eventuell vorhandener Last abbremsen. Dies gestaltet sich für eine Person meist schwierig oder unmöglich, wodurch in der Praxis meist eine weitere Hilfsperson hinzugezogen werden muss.

Um dieses Problem zu lösen, schlägt der Erfinder einen Lastenträger gemäß einem der Patentansprüche 1 bis 8 vor, der mit einem Kippmechanismus zwischen Kugelgehäuse und der Trägervorrichtung ausgestattet ist, wobei der Kippmechanismus eine relative Verkippung von Kugelgehäuse und Trägervorrichtung ermöglicht und einen federbelasteten Ver-/Entriegelungsmechanismus aufweist, wobei der Ver-/Entriegelungsmechanismus einen Fußhebel zum Entriegeln aufweist.

Durch die besondere Ausführung des Ver-/Entriegelungsmechanismus mit Gestaltung des Auslösemechanismus als Fußhebel ist es nur einem Bediener besonders einfach und kräfteschonend möglich, das Abkippen des Träger zu bewerkstelligen. Mit einem leichten Druck mit dem Fuß auf den Fußhebel kann die Trägervorrichtung mit einer eventuell darauf befindlichen Last abgekippt werden. Da zum Lösen des Verriegelungsmechanismus keine Hand benötigt wird, kann bei diesem Lastenträger das Abkippen mit beiden Händen unterstützt werden.

Zur weiteren bedienerfreundlichen Anwendung ist der Fußhebel mit einer Trittplatte ausgestattet. Durch diesen flächenvergrößernden Hebelansatz wird erreicht, dass der Bediener auch ohne Sichtkontakt zum Fußhebel, diesen einfach mit nur einem Fuß kontaktieren kann. Die Trittplatte kann aus ergonomischen Gründen zum Fußhebel abgewinkelt sein. Weiterhin können an der Oberfläche der Trittplatte, wo der Schuh beziehungsweise der Fuß des Bedieners auftritt, eine rutschhemmende Kontur oder auch Gummieinsätze angebracht sein.

Vorteilhaft ist es, wenn der Ver-/Entriegelungsmechanismus ein Eingriffselement aufweist, das mit einem Hebelarm, vorzugsweise mit dem kürzeren Hebelarm, des Fußhebels verbundenen ist, und dass durch Drücken auf den längeren Hebelarm des Fußhebels das Eingriffselement aus einer Arretierung gelöst und die Kippbewegung der Trägervorrichtung freigegeben wird. Über die Verhältnisse der Hebelarmlängen kann die Kraft zum Überwinden der Federkraft und somit zum Entriegeln des Mechanismus möglichst niedrig eingestellt werden. Ist die Trägervorrichtung abgekippt, so kann durch manuelles Anheben, ohne den Fußhebel betätigen zu müssen, die Trägervorrichtung in der waagrechten Position automatisch wieder verriegelt werden. In der waagrechten Position schnappt das Eingriffselement erneut in die Arretierung ein.

Das Eingriffselement kann als ein federbelasteter Bolzen oder eine Nocke ausgestaltet sein. Die Arretierung, in die das Eingriffselement zum Verriegeln eingreift, kann eine Öffnung oder eine Kurvatur aufweisen. Hierbei kann das Eingriffselement und die Arretierung sowohl am Kugelgehäuse als auch an der Trägervorrichtung angebracht sein.

Es ist vorteilhaft, wenn die Kippbewegung des Trägers nach unten begrenzt wird. Hierdurch wird vermieden, das der Träger samt darauf befindlicher Fahrräder beim Abklappen unbeabsichtigt auf dem Boden aufsetzt. Die Kippbewegung lässt sich am besten durch ein Anschlagselement begrenzen, welches zum Beispiel ein Zapfen oder auch ein Gummipuffer sein kann. Ein solches Anschlagselement kann am Kugelgehäuse des Lastenträgers befestigt sein. Ebenfalls hat der Erfinder vorgesehen das Anschlagselement am Boden der Trägervorrichtung zu befestigen.

Weiterhin hat der Erfinder erkannt, dass es günstig ist, den erfindungsgemäßen Lastenträger, der für die Montage am Kugelkopf der Fahrzeuganhängerkupplung vorgesehen ist, auch dann montieren zu können, wenn an der Fahrzeuganhängerkupplung bereits ein Anhänger angekoppelt ist. Aus dem Stand der Technik sind zwar Lastenträger bekannt, die speziell für die Montage auf eine Anhängerdeichsel eines Anhängers vorgesehen sind. In der Offenlegungsschrift DE 101 01 447 A1 wird ein solcher Fahrradträger beschrieben. Dieser Lastenträger kann aber nicht direkt auf den Kugelkopf einer Anhangerkupplung montiert werden und ist somit in seiner Einsetzbarkeit begrenzt.

Um den Einsatz des erfindungsgemäßen Lastenträgers auch auf einer Anhängerdeichsel zu ermöglichen, schlägt der Erfinder einen Lastenträgeradapter für eine Anhängerdeichsel vor, wobei ein Kugelkopf, mit den gleichen Abmessungen wie der Kugelkopf an einer Anhängerkupplung, mit einer Befestigungsvorrichtung an zumindest einem Deichselholm kippsicher befestigt werden kann. Dieser Lastenträgeradapter kann permanent auf der Anhängerdeichsel montiert sein, ohne die Funktion der Anhängerdeichsel einzuschränken.

Eine besondere Ausführung des Lastenträgeradapters kann aus einem mit einer Befestigungsplatte verbundenen Kugelkopf bestehen, wobei die Befestigungsplatte an vorhandenen Verschraubungen und/oder Löcher der Anhängerdeichsel geschraubt werden kann. Diese Ausführung ist bei T-förmigen Anhängerdeichseln sehr gut geeignet.

Ist die Anhängerdeichsel V-förmig ausgebildet, so ist es vorteilhaft, wenn der Lastenträgeradapter ein zwischen die Deichselholme anklemmbares Trägerelement aufweist, welches den Kugelkopf aufnehmen kann.

Es kann günstig sein, wenn dieses Trägerelement in das offene Hohlprofil des Deichselholms eingreift und auf der oberen oder der unteren Seite des Deichselholms eine drehbare Lasche an den Trägerelementenden vorgesehen ist, die den Deichselholm zumindest teilweise umschließt und über eine schraubbare Verbindung das Trägerelementelement mit dem Deichselholm verklemmt. Diese stabile Verbindung eignet sich besonders bei permanenter Montage des Lastenträgeradapters auf der Anhängerdeichsel.

Vorteilhaft ist es, wenn die Lasche gegenüber der Längsachse des Trägerelements abwinkelbar ist, so dass der Lastenträgeradapter an den Einschlusswinkel der Deichselholme angepasst werden kann. Der Lastenträgeradapter kann hierdurch an verschieden Typen von Anhängerdeichseln befestigt werden.

Ebenfalls günstig ist es, wenn der Kugelkopf vom Trägerelement/Befestigungsplatte abnehmbar, vorzugsweise abschraubbar, ausgeführt ist. Eine mögliche Gefahrenstelle, die der abstehende Kugelkopf bilden kann, wird jetzt vermieden. Die Abschraubmöglichkeit des Kugelkopfes ermöglicht insbesondere den Caravanbesitzer einen Zugang zum Flaschenkasten, ohne den Träger wieder komplett abmontieren zu müssen. Außerdem ermöglicht diese Form des Adapters eventuell vorhandene Deichselabdeckungen, ohne größere Änderungen, integrieren zu können.

Zusätzliche Merkmale und Vorteile der Erfindung ergeben sich aus der nachfolgenden Beschreibung bevorzugter Ausführungsbeispiele unter Bezugnahme auf die Zeichnungen.

Die Erfindung soll nachfolgend anhand der Zeichnungen näher erläutert werden. Es wird darauf hingewiesen, dass in den Figuren 1 bis 3 des Lastenträgers, die Plattform, auf die zum Beispiel Fahrräder angebracht werden können, aufgrund der großen Abmessungen nicht dargestellt sind.
Es stellen dar:
- Figur 1:: Seitenansicht des Lastenträgers;
- Figur 2:: Lastenträger aus Figur 1 mit geöffnetem Handhebel und abgeklappter Trägervorrichtung;
- Figur 3:: Frontansicht des Klemmmechanismus;
- Figur 4:: Querschnitt eines Lastenträgeradapters, der nicht Gegenstand der Erfindung ist;
- Figur 5:: Lastenträgeradapter nach Figure 4 in einer Ansicht von oben.

Die Figur 1 zeigt in einer Seitenansicht einen Lastenträger zur Montage an den Kugelkopf 1 einer Anhängerkupplung. Dieser Lastenträger zeichnet sich durch seinen besonderen Klemmmechanismus 3 für den Anhängerkugelkopf 1 und durch den besonderen Abklappmechanismus der Trägervorrichtung 4 aus.

Beschreibung des Klemmmechanismus 3: Am Kugelgehäuse 2, welches den Kugelkopf 1 der Anhängerkupplung aufnehmen kann, ist ein Handhebel 12, der zum Öffnen und Schließen des Klemmmechanismus dient, schwenkbar angebracht. Der Handhebel 12, der hier als Totpunkthebel ausgeführt ist, wird über eine pleuelartig geformte Stange mit der Zugstange 10 verbunden. An der Zugstange 10 ist die gabelförmige Konterplatte 9 befestigt. In der geschlossenen Hebelstellung wird der Handhebel 12 mittels eines Hakens 13 am Kugelgehäuse arretiert. Mittels einer Einstellschraube 20, die am Ende an der Zugstange 10 angebracht ist, kann die gabelförmige Konterplatte 9 bei geschlossener Hebelstellung an den Kugelkopf 1 variabel angedrückt werden und somit eine Anpassung beziehungsweise Nachjustierung der Klemmkraft erfolgen. Zum Öffnen des Klemmmechanismus 3 wird der Haken 13 des Handhebels 12 gelöst und der Handhebel nach oben geschwenkt. Hierdurch wird die in der Führung 11 geführte Zugstange 10 und gleichzeitig die Konterplatte 9 nach unten gedrückt. In dieser Stellung kann der Kugelkopf 1 im Klemmmechanismus 3 "ein-/ausgefädelt" werden.

Häufig werden Zubehörteile an Kraftfahrzeugen entwendet. Aus diesem Grund besitzt dieser Lastenträger einen besonders einfachen und effektiven Diebstahlschutz. Ein Schloss 14, welches den Handhebel 12 mit dem Kugelgehäuse 2 verbindet und somit ein Öffnen des Klemmmechanismus 3 sperrt, verhindert dass der Lastenträger von Unbefugten vom Fahrzeug abmontiert wird.

Beschreibung des Abklappmechanismus: Die Trägervorrichtung 4 ist schwenkbar am Kugelgehäuse 2 befestigt. Wie in Figur 1 dargestellt, verhindert ein Bolzen 8, der über eine Feder 19 gespannt ist und in eine Bohrung am Kugelgehäuse 2 eingreift, die Drehbewegung der Trägervorrichtung 4. Ein Ende des Bolzens 8 ist mit einem Fußhebel 6 drehbar verbunden. Um den Verriegelungsmechanismus zu lösen und die Trägervorrichtung 4 abklappen zu können, wird durch einen Druck mit nur einem Fuß auf die Trittplatte 7 des Fußhebels 6 der Bolzen 8 aus der Öffnung im Kugelgehäuse 2 gezogen und dadurch die Kippbewegung frei gegeben. Ein Anschlagszapfen 15 begrenzt die Kippbewegung der Trägervorrichtung nach unten und verhindert somit zum Beispiel das unbeabsichtigte Aufschlagen der Trägervorrichtung 4 am Boden.

Die Figur 2 zeigt den Lastenträger aus Figur 1 mit geöffnetem Handhebel und abgeklappter Trägervorrichtung.

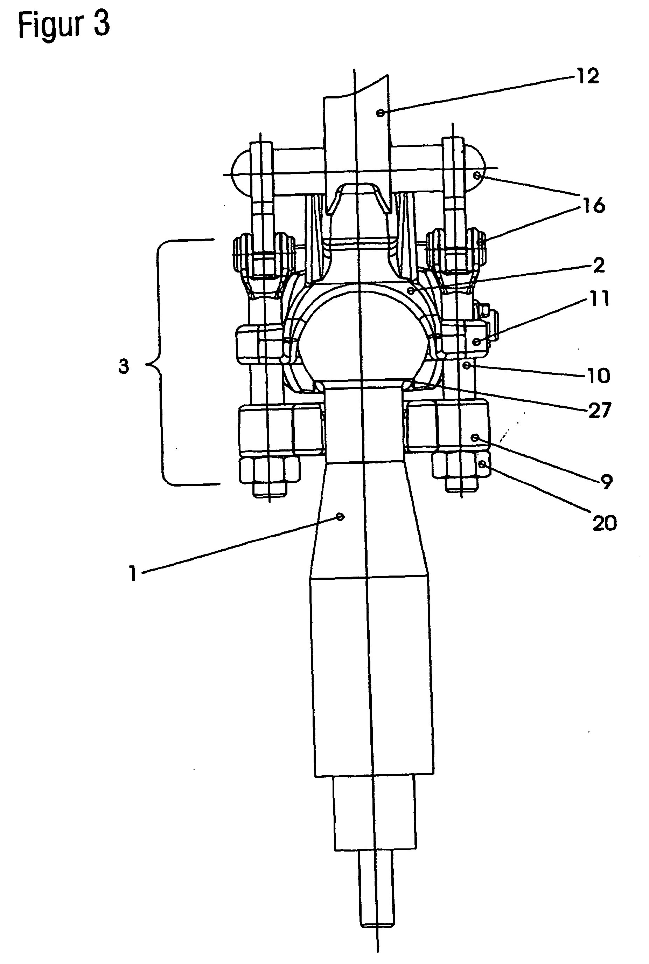

Die Figur 3 zeigt in einer Frontansicht den Klemmmechanismus 3 des Lastenträgers in geöffneter Stellung. Im oberen Bereich der Figur ist zum Teil noch der Handhebel 12 zu erkennen. Links und rechts an diesem Handhebel 12 sind mittels zwei gelagerter Schwenkachsen 16 jeweils eine pleuelförmige Stange mit der Zugstange 10 verbunden. In der geöffneten Hebelstellung werden die Zugstangen 10 in den Führungen 11 des Kugelgehäuses 2 soweit nach unten verfahren, dass der Kugelkopf 1 zwischen Kugelgehäuse 2 und Konterplatte 9 platziert werden kann.

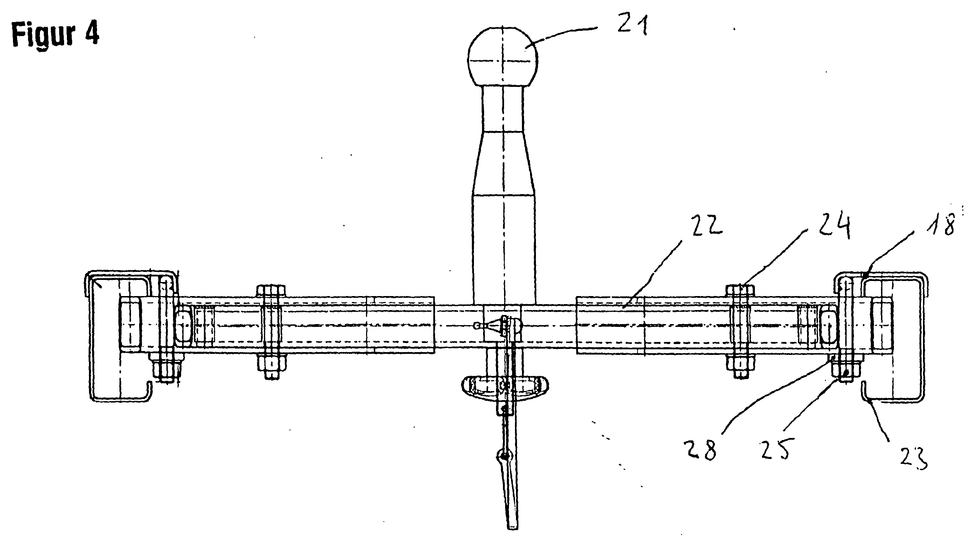

In Figur 4 ist der Querschnitt durch einen Lastenträgeradapter dargestellt. Diese Ausführung eignet sich speziell zur Montage an V-förmigen Anhängerdeichseln. Der Lastenträgeradapter besteht aus einem länglichen Trägerelement 22, welches aus- beziehungsweise einschiebbare Enden aufweist, die eine Längeneinstellung ermöglichen. Über die Schrauben zu Längeneinstellung 24 wird die Länge des Trägerelementes 22, die an die Anhängerdeichsel angepasst werden kann, fixiert. In der Mitte dieses Trägerelementes 22 ist ein Kugelkopf 21 befestigt. Dieser Kugelkopf 21 besitzt die gleichen Abmessungen wie ein Kugelkopf einer Anhängerkupplung und bildet den Befestigungspunkt für einen erfindungsgemäßen Lastenträger. Um den Lastenträgeradapter an einer Anhängerdeichsel fest zu montieren, werden die Enden des Trägerelementes 22 in das Hohlprofil beider Deichselholme 23 geschoben. Zwei bezüglich der Trägerelementlängsachse schwenkbare Laschen 18 werden an den Einschlusswinkel der Deichselholme 23 angepasst. Mit zwei Schrauben 25 oder einem U-Bügel, der an seinen Schenkelenden Gewinde und Muttern aufweist, werden die Enden des Trägerelements 22 mit Hilfe der Laschen 18 mit dem Deichselholm 23 fest verklemmt. Wird ein U-Bügel 25 zur Verklemmung der Lasche 18 und des Deichselholmes 23 verwendet, so wird er mit einer längliche Konterplatte 28 befestigt. Die Konterplatte 28 besitzt zwei Bohrungen, in die die zwei U-Bügelschenkel eingeführt werden.

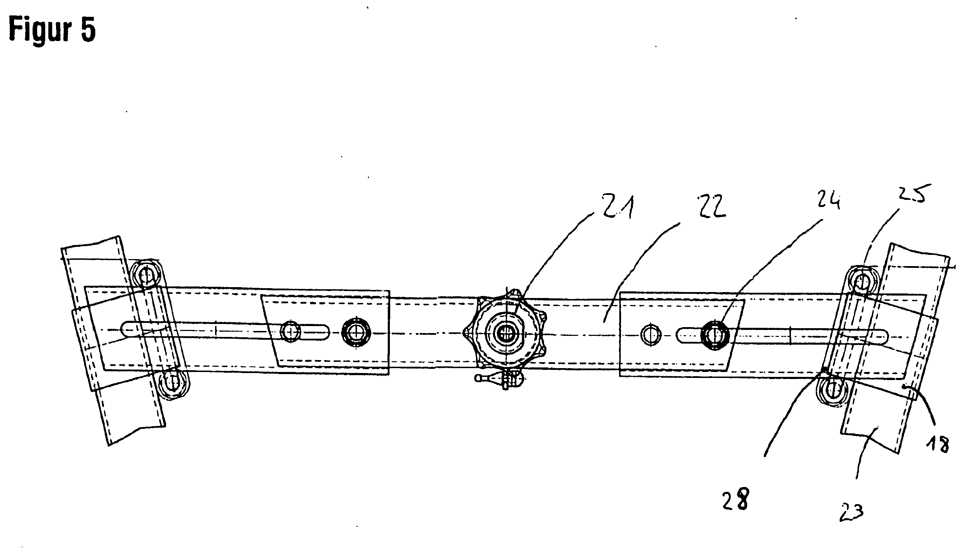

Die Figur 5 zeigt den Lastenträgeradapter aus Figur 4 in einer Ansicht von oben. Es wird diejenige Seite gezeigt, auf der sich der Kugelkopf 21 befindet. In dieser Darstellung ist die Längenverstellmimik der Enden des Trägerelementes 22 gut zu erkennen. Über einen Längsschlitz können die Trägerelementenden über einen gewissen Längenbereich verfahren werden und mittels der Schraube 24 kann die gewünschte Endlänge fest eingestellt werden. An den Enden befindet sich jeweils eine Lasche 18, die einen Deichselholm 23 zumindest teilweise umgreifen kann. Diese Lasche 18 ist um die Trägerelementlängsachse schwenkbar ausgeführt und kann so einfach an die Einschlusswinkel der Deichselholme 23, vorzugsweise einer V-förmigen Anhängerdeichsel, angepasst werden. Die Lasche 18 ist mit einem U-Bügel 25 verbunden. Mit Hilfe einer Konterplatte 28 die zwei Bohrungen aufweist, in die die Schenkel des U-Bügels eingeführt werden, kann das Trägerelement 22 mit den Deichselholmen 23 verklemmt werden.

Insgesamt wird also durch die Erfindung ein Lastenträger zur Befestigung an einer Anhängerkupplung eines Kraftfahrzeuges zur Verfügung gestellt, der sich durch besonders einfache Handhabung bei der Montage beziehungsweise der Demontage an einem Kraftfahrzeug auszeichnet und zusätzlich einen Diebstahlschutz aufweist. Außerdem verfügt dieser Lastenträger über einen besonderen Abklappmechanismus der im Bedienungskomfort den bisher bekannten Abklappmechanismen bei Lastenträgern überlegen ist. Damit solch ein Lastenträger nicht nur an Anhängerkupplungen von Kraftfahrzeugen adaptiert werden kann, sondern auch zum Beispiel auf der Deichsel an einem Anhänger, wird weiterhin ein spezieller Lastenträgeradapter für den erfindungsgemäßen Lastenträger zur Verfügung gestellt.

### Bezugszeichenliste

- 1: Kugelkopf
- 2: Kugelgehäuse
- 3: Klemmmechanismus
- 4: Trägervorrichtung
- 5: Kippmechanismus
- 6: Fußhebel
- 7: Trittplatte
- 8: Bolzen (Eingriffselement)
- 9: gabelförmige Konterplatte
- 10: Zugstange
- 11: Führung für Zugstange
- 12: Handhebel
- 13: Haken
- 14: Schloss
- 15: Anschlagzapfen
- 16: Schwenkachse
- 17: Verbindungselement
- 18: Lasche
- 19: Feder
- 20: Einstellschraube
- 21: Kugelkopf des Lastenträgeradapters
- 22: Trägerelement
- 23: Deichselholm
- 24: Schraube zur Einstellung der Trägerelementlänge
- 25: Schraube (U-Bügel mit Gewindeenden) zur Fixierung der Laschen
- 26: Rand-/Konterfläche der Konterplatte
- 27: unteren Randfläche des Kugelkopfes
- 28: Konterplatte des Lastenträgeradapters

## Patentansprüche

1. Lastenträger zur Befestigung an einer Anhängerkupplung eines Kraftfahrzeuges, mindestens bestehend aus einem Kugelgehäuse (2), das einen Kugelkopf (1) der Anhängerkupplung zumindest teilweise umschließt, einem Klemmmechanismus (3), der den Kugelkopf (1) fest mit dem Kugelgehäuse (2) verbinden kann, einer Trägervorrichtung (4) zur Aufnahme der Lasten, vorzugsweise zur Aufnahme von Zweirädern, vorzugsweise Fahrrädern, wobei der Klemmmechanismus (3) ein Hebelwerk aufweist, **dadurch gekennzeichnet, dass** das Hebelwerk den Kugelkopf (1) zwischen dem Kugelgehäuse (2) und einer gabelförmigen Konterplatte (9) verklemmt, wobei die gabelförmige Konterplatte (9) einen zum Kugelkopf (1) hin zumindest teilweise konischen Rand und eine Rand-/Konterfläche (26) besitzt, die an der unteren Randfläche (27) des Kugelkopfes angreift und die Konterplatte (9) den Hals der Anhängerkupplung unterhalb des Kugelkopfes (1) umgreift.

2. Lastenträger gemäß dem voranstehenden Patentanspruch 1, **dadurch gekennzeichnet, dass** die Konterplatte (9) mit zumindest einem Zugelement, vorzugsweise mit zumindest einer Zugstange (10) verbunden ist, wobei das zumindest eine Zugelement in zumindest einer Führung (11) im Kugelgehäuse (2) geführt wird und an einem handbetätigten Hebelmechanismus angreift.

3. Lastenträger gemäß dem voranstehenden Patentanspruch 2, **dadurch gekennzeichnet, dass** die mindestens eine Zugstange (10) in einer Achse geführt ist und über zwei senkrecht zu dieser Achse angeordnete Schwenkachsen (16) mit einem Handhebel (12) verbunden ist.

4. Lastenträger gemäß einem der voranstehenden Patentansprüche 2 und 3, **dadurch gekennzeichnet, dass** das Zugelement (10) in seiner Länge einstellbar ausgeführt ist.

5. Lastenträger gemäß einem der voranstehenden Patentansprüche 2 bis 4, **dadurch gekennzeichnet, dass** der Handhebel (12) als Totpunkthebel ausgeführt ist.

6. Lastenträger gemäß einem der voranstehenden Patentansprüche 2 bis 5, **dadurch gekennzeichnet, dass** der Handhebel (12) entweder parallel zur Fahrtrichtung oder senkrecht zur Fahrtrichtung des Kraftfahrzeuges ausgerichtet ist.

7. Lastenträger gemäß einem der voranstehenden Patentansprüche 2 bis 6, **dadurch gekennzeichnet, dass** der Handhebel (12) mittels eines Hakens (13) oder einer Klinke, die unter Federlast stehen kann, am Kugelgehäuse (2) lösbar eingreift.

8. Lastenträger gemäß einem der voranstehenden Patentansprüche 2 bis 7, **dadurch gekennzeichnet, dass** der Handhebel (12) ein Schloss (14) aufweist.

9. Lastenträger gemäß einem der Patentansprüchen 1 bis 8 **dadurch gekennzeichnet, dass** der einen Kippmechanismus (5) zwischen Kugelgehäuse (2) und der Trägervorrichtung (4) aufweist, der eine relative Verkippung von Kugelgehäuse (2) und Trägervorrichtung (4) ermöglicht, wobei der Kippmechanismus (5) einen federbelasteten Ver-/Entriegelungsmechanismus aufweist, der einen Fußhebel (6) zum Entriegeln aufweist.

10. Lastenträger gemäß dem voranstehenden Patentanspruch 9, **dadurch gekennzeichnet, dass** der Fußhebel (6) eine Trittplatte (7) aufweist, welche zum Fußhebel (6) abgewinkelt ist und die Trittplatte (7) eine rutschhemmende Kontur aufweist.

11. Lastenträger gemäß einem der voranstehenden Patentansprüche 9 und 10, **dadurch gekennzeichnet, dass** der Ver-/Entriegelungsmechanismus ein Eingriffselement aufweist, das mit einem Hebelarm, vorzugsweise mit dem kürzeren Hebelarm, des Fußhebels(6) verbundenen ist, und dass durch Drücken auf den längeren Hebelarm des Fußhebels das Eingriffselement aus einer Arretierung gelöst und die Kippbewegung der Trägervorrichtung (4) freigegeben wird.

12. Lastenträger gemäß dem voranstehenden Patentanspruch 11, **dadurch gekennzeichnet, dass** das Eingriffselement einen Bolzen (8) oder eine Nocke aufweist.

13. Lastenträger gemäß dem voranstehenden Patentanspruch 11, **dadurch gekennzeichnet, dass** die Arretierung eine Öffnung oder eine Kurvatur aufweist.

14. Lastenträger gemäß einem der voranstehenden Patentansprüche 1 bis 13, **dadurch gekennzeichnet, dass** ein Anschlagselement vorgesehen ist, welches die Kippbewegung der Trägervorrichtung nach unten begrenzt.

15. Lastenträger gemäß dem voranstehenden Patentanspruch 14, **dadurch gekennzeichnet, dass** das Anschlagselement ein am Kugelgehäuse angebrachter Zapfen (15) ist.

## Claims

1. Load carrier for fastening to a trailer coupling of a motor vehicle, at least consisting of a ball housing (2) which at least partly surrounds a ball head (1) of the trailer coupling, a clamping mechanism (3) which can connect the ball head (1) firmly to the ball housing (2), and a carrier device (4) for receiving the loads, preferably for receiving two-wheeled vehicles, preferably bicycles, the clamping mechanism (3) comprising a lever apparatus, **characterized in that** the lever apparatus clamps the ball head (1) between the ball housing (2) and a fork-shaped counter-plate (9), the fork-shaped counter-plate (9) having an edge which is at least partly conical towards the ball head (1) and an edge surface/counter-surface (26) which acts on the lower edge surface (27) of the ball head, and the counter-plate (9) gripping around the neck of the trailer coupling below the ball head (1).

2. Load carrier according to the preceding Patent Claim 1, **characterized in that** the counter-plate (9) is connected to at least one pull element, preferably to at least one pull rod (10), the at least one pull element being guided in at least one guide (11) in the ball housing (2) and engaging on a manually operated lever mechanism.

3. Load carrier according to the preceding Patent Claim 2, **characterized in that** the at least one pull rod (10) is guided on an axis and is connected to a hand lever (12) via two pivoting spindles (16) arranged at right angles to this axis.

4. Load carrier according to one of the preceding Patent Claims 2 and 3, **characterized in that** the pull element (10) is length-adjustable.

5. Load carrier according to one of the preceding Patent Claims 2 to 4, **characterized in that** the hand lever (12) is in the form of a dead centre lever.

6. Load carrier according to one of the preceding Patent Claims 2 to 5, **characterized in that** the hand lever (12) is aligned either parallel to the direction of travel or at right angles to the direction of travel of the motor vehicle.

7. Load carrier according to one of the preceding Patent Claims 2 to 6, **characterized in that** the hand lever (12) engages releasably on the ball housing (2) by means of a hook (13) or a catch which may be spring-loaded.

8. Load carrier according to one of the preceding Patent Claims 2 to 7, **characterized in that** the hand lever (12) comprises a lock (14).

9. Load carrier according to one of Patent Claims 1 to 8, **characterized in that** it comprises a tilting mechanism (5) between ball housing (2) and the carrier device (4), which makes relative tilting of ball housing (2) and carrier device (4) possible, the tilting mechanism (5) comprising a spring-loaded locking/unlocking mechanism which comprises a foot lever (6) for unlocking.

10. Load carrier according to the preceding Patent Claim 9, **characterized in that** the foot lever (6) comprises a tread plate (7) which is angled in relation to the foot lever (6), and the tread plate (7) comprises an anti-slip contour.

11. Load carrier according to one of the preceding Patent Claims 9 and 10, **characterized in that** the locking/unlocking mechanism comprises an engagement element which is connected to one lever arm, preferably to the shorter lever arm, of the foot lever (6), and **in that**, by pressing on the longer lever arm of the foot lever, the engagement element is released from an arresting arrangement and the tilting movement of the carrier device (4) is enabled.

12. Load carrier according to the preceding Patent Claim 11, **characterized in that** the engagement element comprises a bolt (8) or a projection.

13. Load carrier according to the preceding Patent Claim 11, **characterized in that** the arresting arrangement comprises an opening or a curvature.

14. Load carrier according to one of the preceding Patent Claims 1 to 13, **characterized in that** a stop element is provided, which limits the tilting movement of the carrier device downwards.

15. Load carrier according to the preceding Patent Claim 14, **characterized in that** the stop element is a stud (15) attached to the ball housing.

## Revendications

1. Porte-charge destiné à être fixé sur un dispositif d'attelage d'un véhicule automobile, se composant au moins d'un boîtier à rotule (2) qui entoure une rotule (1) du dispositif d'attelage au moins partiellement, d'un mécanisme de serrage (3) qui peut connecter fixement la rotule (1) au boîtier à rotule (2), d'un dispositif de support (4) pour recevoir la charge, de préférence pour recevoir des deux-roues, de préférence des bicyclettes, le mécanisme de serrage (3) présentant un système de levier, **caractérisé en ce que** le système de levier serre la rotule (1) entre le boîtier à rotule (2) et une contre-plaque (9) en forme de fourche, la contre-plaque (9) en forme de fourche possédant un bord au moins partiellement conique vers la rotule (1) et une surface de bord/contre-surface (26) qui vient en prise sur la surface de bord inférieure (27) de la rotule et la contre-plaque (9) venant en prise autour du col du dispositif d'attelage en dessous de la rotule (1).

2. Porte-charge selon la revendication 1 précédente, **caractérisé en ce que** la contre-plaque (9) est connectée à au moins un élément de traction, de préférence à au moins une barre de traction (10), l'au moins un élément de traction étant guidé dans au moins une glissière (11) dans le boîtier à rotule (2) et venant en prise sur un mécanisme de levier manuel.

3. Porte-charge selon la revendication précédente 2, **caractérisé en ce que** l'au moins une barre de traction (10) est guidée dans un axe et est connectée à un levier manuel (12) par le biais de deux axes de pivotement (16) disposés perpendiculairement à cet axe.

4. Porte-charge selon l'une quelconque des revendications précédentes 2 et 3, **caractérisé en ce que** l'élément de traction (10) est réalisé de manière ajustable en longueur.

5. Porte-charge selon l'une quelconque des revendications précédentes 2 à 4, **caractérisé en ce que** le levier manuel (12) est réalisé sous la forme d'un levier à point mort.

6. Porte-charge selon l'une quelconque des revendications précédentes 2 à 5, **caractérisé en ce que** le levier manuel (12) est orienté soit parallèlement à la direction de conduite soit perpendiculairement à la direction de conduite du véhicule automobile.

7. Porte-charge selon l'une quelconque des revendications précédentes 2 à 6, **caractérisé en ce que** le levier manuel (12) vient en prise de manière desserrable sur le boîtier à rotule (2) au moyen d'un crochet (13) ou d'un cliquet, qui peut être soumis à une force de ressort.

8. Porte-charge selon l'une quelconque des revendications précédentes 2 à 7, **caractérisé en ce que** le levier manuel (12) présente une serrure (14).

9. Porte-charge selon l'une quelconque des revendications 1 à 8, **caractérisé en ce qu'**il présente un mécanisme de basculement (5) entre le boîtier à rotule (2) et le dispositif de support (4), qui permet un basculement relatif du boîtier à rotule (2) et du dispositif de support (4), le mécanisme de basculement (5) présentant un mécanisme de verrouillage/déverrouillage sollicité par ressort, qui présente un levier à pied (6) pour le déverrouillage.

10. Porte-charge selon la revendication précédente 9, **caractérisé en ce que** le levier à pied (6) présente une plaque d'appui (7) qui est coudée vers le levier à pied (6) et la plaque d'appui (7) présente un contour antidérapant.

11. Porte-charge selon l'une quelconque des revendications précédentes 9 et 10, **caractérisé en ce que** le mécanisme de verrouillage/déverrouillage présente un élément d'engagement qui est connecté à un bras de levier, de préférence au bras de levier plus court du levier à pied (6), et **en ce qu'**en pressant sur le bras de levier plus long du levier à pied, l'élément d'engagement est libéré d'un blocage et le mouvement de basculement du dispositif de support (4) est libéré.

12. Porte-charge selon la revendication précédente 11, **caractérisé en ce que** l'élément d'engagement présente un boulon (8) ou une came.

13. Porte-charge selon la revendication précédente 11, **caractérisé en ce que** le blocage présente une ouverture ou une courbure.

14. Porte-charge selon l'une quelconque des revendications précédentes 1 à 13, **caractérisé en ce que** l'on prévoit un élément de butée qui limite vers le bas le mouvement de basculement du dispositif de support.

15. Porte-charge selon la revendication précédente 14, **caractérisé en ce que** l'élément de butée est un tourillon (15) monté sur le boîtier à rotule.
